Europäisches Patentamt

European Patent Office

Office européen des brevets

(11) Veröffentlichungsnummer: **0 175 065**
**B1**

(12) **EUROPÄISCHE PATENTSCHRIFT**

(45) Veröffentlichungstag der Patentschrift:
24.02.88

(51) Int. Cl.⁴: **B 23 B 31/04**

(21) Anmeldenummer: **85107551.5**

(22) Anmeldetag: **19.06.85**

(54) **Nachspannendes Bohrfutter.**

(30) Priorität: **07.09.84 DE 3432918**

(43) Veröffentlichungstag der Anmeldung:
**26.03.86 Patentblatt 86/13**

(45) Bekanntmachung des Hinweises auf die Patenterteilung:
**24.02.88 Patentblatt 88/8**

(84) Benannte Vertragsstaaten:
**CH FR GB IT LI**

(56) Entgegenhaltungen:
**DE-A-2 133 142**
**DE-A-2 806 797**
**DE-A-2 818 247**
**DE-A-3 322 965**
**DE-A-3 416 986**
**FR-A-2 543 035**
**GB-A-2 034 210**
**US-A-3 712 632**

(73) Patentinhaber: **Röhm, Günter Horst, Heinrich-Röhm- Strasse 50, D-7927 Sontheim (DE)**

(72) Erfinder: **Röhm, Günter Horst, Heinrich- Röhm-Strasse 50, D-7927 Sontheim (DE)**

(74) Vertreter: **Fay, Hermann, Dipl.- Phys. Dr., Ensingerstrasse 21 Postfach 1767, D-7900 Ulm (Donau) (DE)**

## Beschreibung

Die Erfindung betrifft ein nachspannendes Bohrfutter mit einem eine Aufnahme für eine Bohrspindel aufweisenden Futterkörper, einem Spannkonus und mit Spannbacken, die an der Kegelfläche des Spannkonus und außerdem mit ihrem in Richtung der Spannkonuserweiterung zeigenden Ende radial an einem ihre axiale Lage im Bohrfutter bestimmenden Druckstück geführt sind, so daß die Spannbacken durch eine axiale Relativverstellung zwischen dem Spannkonus und dem Druckstück radial zur Achse einer den Schaft des einzuspannenden Werkzeugs aufnehmenden Einspannöffnung verstellbar sind, wozu der Spannkonus in einem Spanngewinde am Futterkörper verdrahbar ist sowie eine außen am Futterkörper angeordnete Spannhülse aufweist.

Aus der DE-B-21 33 142 ist ein derartiges nachspannendes Bohrfutter bekannt, bei dem das Spanngewinde außen auf dem Futterkörper unmittelbar zwischen diesem und der mit dem ringförmigen Druckstück verbundenen Spannhülse angeordnet ist. Dieses Spanngewinde ermöglicht jedoch kein selbsttätiges Nachspannen. Vielmehr sind der Spannkonus und ein zentraler Druckbolzen in koaxialer Anordnung axial verschiebbar im Futterkörper geführt und gemeinsam gegen ein Druckpolster abgestützt. Der vom Ende des Werkzeugschaftes auf den Druckbolzen ausgeübte axiale Bohrdruck wird am Druckpolster unter Richtungsumkehr an den Spannkonus weitergegeben, was die die selbsttätige Nachspannung bewirkende axiale Relativverstellung zwischen dem Spannkonus und dem Druckstück ergibt.

Aus der DE-A-2 815 026 ist ein nachspannendes Bohrfutter bekannt, bei dem der Spannkonus unmittelbar mit der Spannhülse und ebenfalls drehschlüssig mit den Spannbacken verbunden ist, so daß eine drehschlüssige Verbindung zwischen dem Druckstück und der Spannhülse indirekt über den Spannkonus und die Spannbacken zustande kommt. Das Druckstück ist drehschlüssig mit den Spannbacken verbunden und als im Futterkörper zentraler Gewindebolzen in dem als Muttergewinde ausgebildeten Spanngewinde verdrehbar. Diese Bauform besitzt den Vorteil, daß die Spannhülse axial unverschiebbar am Futterkörper geführt sein kann. Ein Spannen des Bohrfutters ist sowohl von Hand mit Hilfe der Spannhülse als auch im Sinne eines selbsttätigen Nachspannens während des Bohrbetriebs durch die Reaktionsmomente des Werkzaugs möglich, indem der Drehwiderstand des Werkzeugs über die Spannbacken an dem mit ihnen drehschlüssig verbundenen Druckstück in gleicher Weise wie die Spannhülse eine Spannbewegung bewirkt.

Bei allen diesen bekannten Bohrfuttern ist der Futterkörper zwischen der Aufnahme für die Bohrspindel und der Einspannöffnung geschlossen, nämlich durch den das Druckstück bildenden zentralan Gewindebolzen oder durch das Druckpolster und den an ihm abgestützten zentralen Druckbolzen. Es besteht daher keine Möglichkeit, im Schlagbohrbetrieb die an der Schlagbohrspindel zur Verfügung stehende Schlagleistung direkt und ohne Schwächung durch das Bohrfutter auf das Werkzeug zu übertragen. Andererseits sind aus der Praxis Bohrfutter zum Schlagbohren bekannt, bei welchen der Futterkörper zwischen der Aufnahme für die Bohrspindel und der Einspannöffnung für das Werkzeug einen axialen Durchgang aufweist, durch den hindurch die Schlagwirkung der Bohrspindel bzw. eines in der hohlen Bohrspindel axial geführten Döppers direkt auf das Ende des in der Einspannöffnung zwischen den Spannbacken gehaltenen Werkzeugschaftes übertragbar ist. Jedoch besitzen diese Bohrfutter keine Nachfunktion, die aber auch im Schlagbohrbetrieb an sich wünschenswert wäre.

Der Erfindung liegt die Aufgabe zugrunde, ein nachspannendes Bohrfutter der eingangs genannten Art so auszubilden, daß es für den Schlagbohrbetrieb besonders geeignet ist.

Diese Aufgabe wird nach der Erfindung dadurch gelöst, daß dar Spannkonus mit den Spannbacken drehschlüssig verbunden ist, daß der Futterkörper zwischen der Aufnhme für die Bohrspindel und der Einspannöffnung einen axialen Durchgang aufweist, durch den hindurch die Schlagwirkung der Bohrspindel bzw. eines in der hohlen Bohrspindel axial geführten Döppers auf das Ende des in der Einspannöffnung zwischen den Spannbacken gehaltenen Werkzeugschaftes übertragbar ist, daß das Druckstück als den Durchgang bzw. die Einspannöffnung umschließender Ring ausgebildet ist, und daß ein am Futterkörper zwischen zwei Endstellungen begrenzt verdrehbarer Sperring vorgesehen ist, der in Umfangsrichtung mit der Spannhülse durch eine lösbare Kupplung verbunden ist.

Der durch die Erfindung erreichte Vorteil besteht im wesentlichen darin, daß dank des im Futterkörper vorgesehenen Durchgangs die Schlagwirkung von der Bohrspindel direkt auf das Werkzeug übertragen werden und gleichzeitig bei offener Kupplung ein schlüsselfreies Betätigen des Futters von Hand an der Spannhülse stattfinden kann, und daß eine Nachspannfunktion möglich ist, die bei geschlossener Kupplung durch die Endstellungen des Sperringes in genau vorgegebenem Umfang begrenzt ist. Diese genau begrenzte Nachspannung gewährleistet nicht nur die sichere Einspannung des Werkzeugs, sondern verhindert auch, daß sich die Spannbacken im Schlagbohrbetrieb zu tief in den Schaft des Werkzeuges eingraben können. Besonders im Fall eines glatten zylindrischen Werkzeugschaftes können sich daher die Spannbacken aus dem anfänglichen Spannzustand heraus in den Werkzeugschaft eingraben, bis eine drehschlüssige Mitnahme des Werkzeugs durch die Spannbacken gewährleistet ist. Die danach einsetzende Nachspannbegrenzung verhindert das weitere Eindringen der Spannbacken und läßt dem Werkzeug die Möglichkeit, sich an den Spannbacken soweit frei zu arbeiten, daß es relativ zu den Spannbacken geringe Axialbewegungen ausführen kann, wie sie beim Schlagbohren zur optimalen Übertragung der Schlagwirkung durch das Werkzeug besonders zweckmäßig sind. In diesem Umfang ist zwar die Einspannung des Werkzeugs zwischen den nicht mehr weiter nachspannfähigen Spannbacken gelockert, jedoch bleibt das Bohrfutter dank der dann sicheren drehschlüssigen Mitnahe zwischen Werkzeugschaft und Spannbacken im Zustand der Nachspannbegrenzung, so daß sich das Bohrfutter selbsttätig nicht öffnen kann und entsprechend auch die Spannbacken nicht wieder aus den von ihnen zuvor selbst geschaffenen Vertiefungen am Werkzeugschaft austreten können. Eine bevorzugte Ausführungsform der Erfindung ist dadurch gekennzeichnet, daß der Futterkörper an der Aufnahme für die Bohrspindel einen Hals aufweist, auf dem der Sperring drehbar geführt ist, und daß der Sperring einen Zapfen aufweist, der in eine im Hals vorgesehene Aussparung greift, deren Ränder in Drehrichtung des Sperrings dessen Endstellungen bestimmende Anschläge für den Zapfen bilden. Die Größe der Aussparung in Umfangsrichtung des Bohrfutters bestimmt daher die Größe des Nachspannbereiches. Der Sperring kann im übrigen in einfacher Weise der Befestigung des Bohrfutters an der Bohrspindel dienen. Besonders zweckmäßig ist dafür, daß der Zapfen von einer radial im Sperring angeordneten Stellschraube gebildet und diese bis zum Austritt des Zapfens aus der Aussparung verstellbar ist, und daß der Sperring bei in die Aussparung vorstehendem Zapfen in dem dann durch die Aussparung zugelassenen Drehbereich Kupplungsglieder, die zur Verbindung des Bohrfutters mit der Bohrspindel dienen, am Hals und ander Bohrspindel im Kupplungseingriff hält sowie bei aus der Aussparung ausgetretenem Zapfen in eine Stellung verdrehbar ist, in der im Sperring vorgesehene Ausnehmungen die Kupplungsglieder bis zur Freigabe der Bohrspindel aufnehmen. Das Bohrfutter kann dann axial von der Bohrspindel abgezogen werden.

Es empfiehlt sich, zwischen dem Sperring und dem Futterkörper eine Feder vorzusehen, deren Kraft im Sinne einer das Bohrfutter spannenden Relativverdrehung von Futterkörper und Sperring wirksam ist. Durch die Feder werden die Spannbacken bei geschlossener Kupplung zwischen dem Sperring und der Spannhülse in ständiger Anlage am Werkzeugschaft gehalten, bis die Nachspannbegrenzung einsetzt. Zweckmäßig ist die Feder in einer in Umfangsrichtung verlaufenden Nut des Sperringes angeordnet und einerseits am Nutende, andererseits an einem Stift gehalten, der am Futterkörper sitzt und in die Nut vorsteht.

Bezüglich der Kupplung zwischen dem Sperring und der Spannhülse bestehen verschiedene Ausführungsmöglichkeiten. Sie kann als nur von Hand schließ- und lösbare Kupplung oder als drehmomentenabhängige Rutsch- oder oder Rastkupplung ausgebildet sein, die selbsttätig öffnet, wenn zum Werkzeugwechsel die Spannhülse von Hand verdreht wird und dabei der über die Kupplung zunächst noch mitgenommene Sperring in einer seiner beiden Endstellungen aufgehalten wird. Dabei muß aber das Öffnungsmoment der Kupplung groß genug sein, daß auch unter den oft sehr starken Beanspruchungen des Schlagbohrbetriebes kein unbeabsichtigtes selbsttätiges Öffnen der Kupplung stattfinden kann. Der Kupplungseingriff erfolgt am besten axial, wozu erfindungsgemäß vorgesehen ist, daß der Sperring axial verschiebbar am Futterkörper geführt und durch eine Kupplungsfeder im axialen Kupplungseingriff mit der Spannhülse gehalten ist. Dabei kann der Kupplungseingriff des Sperringes unmittelbar an der Spannhülse selbst erfolgen, wenn letztere axial im wesentlichen unverschiebbar am Futterkörper geführt ist. Ist dies nicht der Fall, insbesondere wenn das Spanngewinde unmittelbar zwischen der am Spannkonus sitzenden Spannhülse und dem Futterkörper angeordnet ist, so empfiehlt es sich, zwischen der Spannhülse und dem Sperring eine Kupplungshülse vorzusehen, die am Futterkörper axial unverschiebbar geführt und nur drehschlüssig mit der Spannhülse verbunden ist. Der axiale Kupplungseingriff des Sperringes erfolgt dann an der Kupplungshülse, welche die axialen Abstandsänderung zwischen der Spannhülse und dem Sperring ausgleicht. Dabei können als Kupplung zwischen der Kupplungshülse und dem Sperring einander zugeordnete und axial mit einander zum Eingriff kommende Zahnkränze vorgesehen sein. Im übrigen ist bei dieser Bauform das Druckstück zweckmäßig drehbar und axial unverschiebbar im Futterkörper gelagert.

Im folgenden wird die Erfindung an einem in der Zeichnung dargestellten Ausführungsbeispiel näher erläutert; es zeigen:

Fig. 1 einen Axialschnitt durch ein Bohrfutter nach der Erfindung und zwar in der linken Zeichnungshälfte im Zustand der größten, in der rechten Zeichnungshälfte im Zustand der kleinsten Futteröffnung,

Fig. 2 einen Schnitt in Richtung A-A durch das Bohrfutter nach Fig. 1.

Das in der Zeichnung dargestellte nachspannende Bohrfutter besitzt einen Futterkörper 1 mit einer Aufnahme 2 für eine hohle Bohrspindel 3, in der axial ein Döpper 4 geführt ist. Die Antriebsvorrichtung für die Bohrspindel 3 bzw. den Döpper 4 ist nicht dargestellt, da sie nicht zum Gegenstand der Erfindung gehört. Das Bohrfutter besitzt weiter einen Spannkonus 5 und in Längsnuten 6 an der Kegelfläche 7 des Spannkonus 5 geführte Spannbacken 8, die außerdem mit ihrem in Richtung der Spannkonuserweiterung zeigenden Ende 8.1 radial an einem die axiale Lage der Spannbacken 8 im Bohrfutter bestimmenden Druckstück 9 geführt sind. Im Ausführungsbeispiel sind dazu die Spannbacken 8 mit Führungsleisten 8.2 versehen, die im zur radialen Führungsrichtung senkrechten Querschnitt T-förmiges Profil besitzen und in entsprechend gestalteten Führungsnuten 9.1 des Druckstückes 9 laufen, so daß die Führung in axialer Richtung auch zug- und druckübertragend wirkt. Die Führung der Spannbacken 8 sowohl am Spannkonus als auch am Druckstück 9 hat zur Folge, daß sich die Spannbacken 8 durch eine axiale Relativverstellung zwischen dem Spannkonus 5 und dem Druckstück 9 radial zur Achse 10 der Einspannöffnung 11 verstellen, die zur Aufnahme des Schaftes eines nicht dargestellten, im Bohrfutter einzuspannenden Werkzeuges vorgesehen ist. Für diese axiale Relativverstellung ist der Spannkonus 5 mit einer Spannhülse 12 versehen, die in einem außen am Futterkörper 1 angeordneten Spanngewinde 13 verdrehbar ist. Das Druckstück 9 ist im Futterkörper 1 drehbar und über ein Wälzlager 14 axial abgestützt, sowie in axialer Richtung unverschiebbar geführt, wozu ein im Futterkörper 1 gehaltener Querstift 15 in eine Ringnut 16 des Druckkörpers 9 greift. Die Spannbacken 8 sind über die Nuten 6 und die Führungsleisten 8.2 drehschlüssig sowohl mit dem Spannkonus 5 als auch mit dem Druckstück 9 verbunden. Wird die Spannhülse 12 von Hand im Spanngewinde 13 des Futterkörpers 1 verdreht, so ergibt ihre dabei stattfindende axiale Verstellung eine entsprechende axiale Verstellung des Spannkonus 5 gegenüber dem Druckstück 9, so daß sich die Spannbacken 8 je nach Drehrichtung der Spannhülse 12 radial ein- oder auswärts verschieben. Andererseits wird beim Bohrbetrieb der Drehwiderstand eines drehschlüssig an den Spannbacken 8 gehaltenen Werkzeugs auf den Spannkonus 5 und die Spannhülse 12 übertragen, so daß zwischen der Spannhülse 12 und dem mit der Bohrspindel 3 verbundenen Futterkörper 1 ein Drehmoment entsteht, daß im Drehsinn einer Nachspannung des Bohrfutters wirksam ist.

Zwischen der Aufnahme 2 für die Bohrspindel 3 und der Einspannöffnung 11 besitzt der Futterkörper 1 einen axialen Durchgang 17, durch den hindurch die Schlagwirkung des Döppers 4 direkt auf das Ende des in der Einspannöffnung 11 zwischen den Spannbacken 8 gehaltenen Werkzeugschaftes übertragen wird. Das Druckstück 9 ist als diesen Durchgang 17 und die Einspannöffnung 11 umschließender Ring ausgebildet, so daß es die Schlagübertragung vom Döpper 4 auf den Werkzeugschaft nicht behindert. Im übrigen ist ein am Futterkörper 1 zwischen zwei Endstellungen begrenzt verdrehbarer Sperrring 18 vorgesehen, der in Umfangsrichtung mit der Spannhülse 12 durch eine im einzelnen noch zu beschreibende lösbare Kupplung verbunden ist. Der Futterkörper 1 besitzt an der Aufnahme 2 für die Bohrspindel 3 einen Hals 19, auf dem der Sperring 18 drehbar geführt ist. Der Sperring 18 besitzt einen Zapfen 20, der in eine im Hals 19 vorgesehene Aussparung 21 greift. Die diese Aussparung 21 in Drehrichtung begrenzenden Ränder 21.1, 21.2 bilden Anschläge für den Zapfen 20 und bestimmen dadurch die beiden Endstellungen des Sperringes 18. Der Zapfen 20 ist von einer radial im Sperring angeordneten Stellschraube 22 gebildet, die im Sperring 18 mindestens so weit radial zurückgeschraubt werden kann, daß der Zapfen 20 aus der Aussparung 21 vollständig austritt, also nicht mehr als Anschlag wirksam ist. In Öffnungen des Halses 19 einerseits und der Bohrspindel 3 andererseits liegen die Bohrspindel 3 mit dem Hals 19 drehschlüssig verbindende Kupplungsglieder 23. Steht der Zapfen 20 in die Aussparung 21 vor, hält der Sperring 18 über seinen gesamten durch die Aussparung 21 zugelassenen Drehbereich die Kupplungsglieder 23 am Hals 19 und an der Bohrspindel 3 im Kupplungseingriff. Wird dagegen die Stellschraube 23 soweit zurückgedreht, daß der Zapfen 20 aus der Aussparung 21 ausgetreten ist, kann der Sperring 18 weiter in eine Stellung verdreht werden, in der im Sperring 18 vorgesehene Ausnehmungen 24 den Kupplungsgliedern 23 gegenüberstehen und diese soweit aufnehmen, daß die Kupplungsglieder 23 die Bohrspindel 3 vollständig freigeben. Das Bohrfutter kann in dieser Stellung des Sperrings 18 axial von der Bohrspindel 3 abgezogen werden.

Zwischen dem Sperring 18 und dem Futterkörper 1 ist eine Feder 25 vorgesehen, deren Kraft im Sinne einer das Bohrfutter spannenden Relativverdrehung zwischen Futterkörper 1 und Sperring 18 wirksam ist. Im Ausführungsbeispiel ist diese Feder 25 als Druckfeder in einer in Umfangsrichtung verlaufenden Nut 26 des Sperrringes 18 angeordnet und einerseits am Nutende andererseits an einem Stift 27 abgestützt, der am Futterkörper 1 sitzt und in die Nut 26 vorsteht. Der Sperrring 18 ist am Futterkörper 1 axial bis gegen einen Anschlagring 28 verschiebbar geführt und durch eine Kupplungsfeder 29 im Kupplungseingriff mit der Spannhülse 12 gehalten. Die Kupplungsfeder 29 ist im Ausführungsbeispiel als Druckfeder zwischen dem Sperring 18 und einer Ringschulter der Bohrspindel 3 eingesetzt. Zwischen der Spannhülse 12 und dem Sperring 18 ist eine Kupplungshülse 30 vorgesehen, die am Futterkörper 1 drehbar und axial unverschiebbar geführt und drehschlüssig mit der Spannhülse 12 verbunden ist. Diese Verbindung wird durch einen an der Spannhülse 12 festen radialen Mitnehmerstift 31 bewirkt, der in ein Langloch 32 der Kupplungshülse 30 greift, das sich über den axialen Verstellbereich der Kupplungshülse 12 erstreckt. Der Kupplungseingriff des Sperringes 18 erfolgt unmittelbar an der Kupplungshülse 30, wobei als Kupplung zwischen der Kupplungshülse 30 und dem Sperrring 18 einander zugeordnete und axial miteinander zum Eingriff kommende Zahnkränze 33 vorgesehen sind. Der Kupplungseingriff dieser Zahnkränze 33 kann so ausgebildet sein, daß sich der Sperring 18 gegen die Kraft der Kupplungsfeder 29 selbsttätig von Zahn zu Zahn aus dem Kupplungseingriff an der Kupplungshülse 30 heraushebt, wenn die Spannhülse 12 von Hand verdreht und dabei der Sperring 18 durch Anschlag am Zapfen 27 in der einen oder anderen Endstellung festgehalten wird. Andererseits muß der Kupplungseingriff aber fest genug sein, daß ein selbstätiges gegenseitiges Verdrehen des Sperrings 18 und der Kupplungshülse 30 unter den Beanspruchungen des Schlagbohrbetriebs ausgeschlossen ist. Durch Wahl der Kraft der Kupplungsfeder 29 und der Form der Zahnflanken an den Zahnkränzen 33 kann das Kupplungsverhalten zwischen dem Sperrring 18 und der Kupplungshülse 30 weitgehend diesen Anforderungen entsprechend eingestellt werden. Es besteht aber grundsätzlich auch die Möglichkeit, den Kupplungseingriff so zu gestalten, daß es zum Öffnen der Kupplung in jedem Fall erforderlich ist, den Sperrring 18 von Hand axial gegen die Kraft der Kupplungsfeder 29 aus dem Kupplungseingriff an der Kupplungshülse 30 zurückzuschieben.

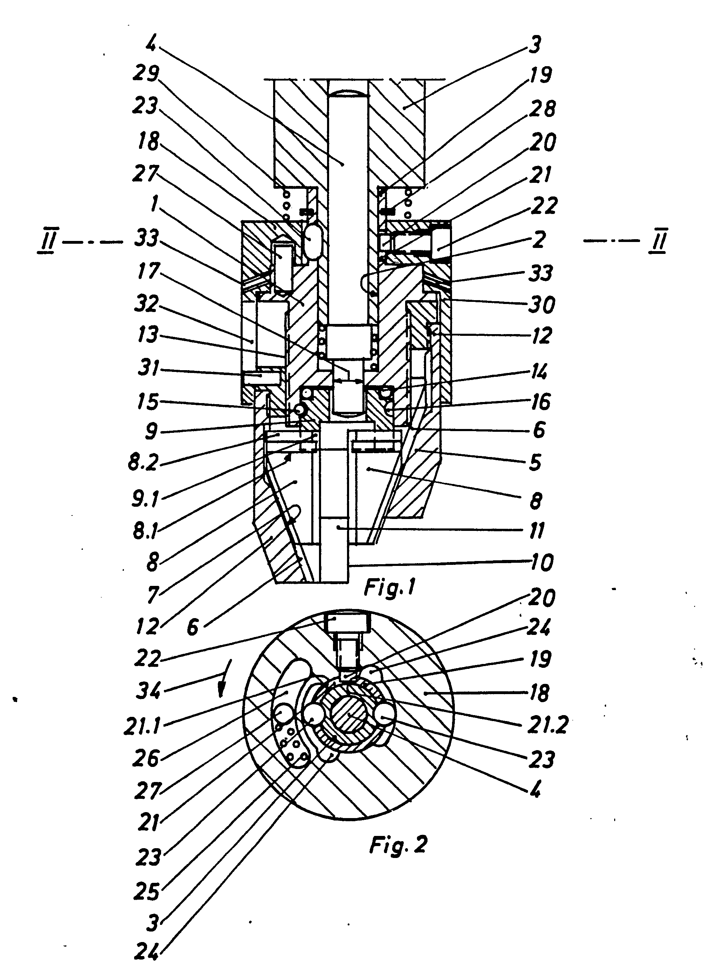

Zum Spannen eines Werkzeugs wird die Spannülse 12 von Hand in ihrem dem Spannen entsprechenden Drehsinn verdreht, wobei über die Kupplung der Zahnkränze 33 der Sperring 18 zunächst in Richtung des in Fig. 2 eingetragenen Pfeiles 34 mitgenommen wird, bis der Zapfen 20 am in Fig. 2 linken Rand 21.1 der Aussparung 21 anschlägt und dadurch der Sperring 18 relativ zum Futterkörper 1 festgehalten wird. Ein weiteres Verdrehen der Spannhülse 12 ist jetzt nur noch bei offener oder sich selbsttätig öffnender Kupplung möglich. Ist das Werkzeug zwischen den Spannbacken 5 eingespannt und die Kupplung geschlossen, so drückt die Kupplungsfeder 29 den Sperring 18 relativ zum Futterkörper 1 weiterhin in der dem Spannen entsprechenden Drehrichtung, wodurch das Bohrfutter im Spannzustand gehalten wird. Graben sich im Bohrbetrieb die Spannbacken 8 in den Werkzeugschaft ein, so kann der Sperring 18 sich im Sinne eines Spannens weiter verdrehen, bis der in Fig. 2 rechte Rand 21. 2 der Aussparung 21 am Zapfen 20 anschlägt, also der in Fig. 2 dargestellte Zustand erreicht wird. Der Sperring 18 verhindert jetzt über die geschlossene Kupplung und die Kupplungshülse 30 ein weiteres spannendes Verdrehen der Spannhülse 12 und des Spannkonus 5, so daß keine weitere Nachspannung mehr möglich ist.

**Patentansprüche**

1. Nachspannendes Bohrfutter mit einem eine Aufnahme (2) für eine Bohrspindel (3) aufweisenden Futterkörper (1), einem Spannkonus (5) und mit Spannbacken (8) die an der Kegelfläche (7) des Spannkonus (5) und außerdem mit ihrem in Richtung der Spannkonuserweiterung zeigenden Ende (8.1) radial an einem ihre axiale Lage im Bohrfutter bestimmenden Druckstück (9) geführt sind, so daß die Spannbacken (8) durch eine axiale Relativverstellung zwischen dem Spannkonus (5) und dem Druckstück (9) radial zur Achse (10) einer den Schaft des einzuspannenden Werkzeugs aufnehmenden Einspannöffnung (11) verstellbar sind, wozu der Spannkonus (5) in einem Spanngewinde (13) am Futterkörper (1) verdrehbar ist sowie eine außen am Futterkörper (1) angeordnete Spannhülse (12) aufweist, dadurch gekennzeichnet, daß der Spannkonus (5) mit den Spannbacken (8) drehschlüssig verbunden ist, daß der Futterkörper (1) zwischen der Aufnahme (2) für die Bohrspindel (3) und der Einspannöffnung (11) einen axialen Durchgang (17) aufweist, durch den hindurch die Schlagwirkung der Bohrspindel (3) bzw. eines in der hohlen Bohrspindel (3) axial geführten Döppers (4) auf das Ende des in der Einspannöffnung (11) zwischen den Spannbacken (8) gehaltenen Werkzeugschaftes übertragbar ist, daß das Druckstück (9) als den Durchgang (17) bzw. die Einspannöffnung (11) umschließender Ring ausgebildet ist, und daß ein am Futterkörper (1) zwischen zwei Endstellungen begrenzt verdrehbarer Sperring (18) vorgesehen ist, der in Umfangsrichtung mit der Spannhülse (12) durch eine lösbare Kupplung verbunden ist.

2. Bohrfutter nach Anspruch 1, dadurch gekennzeichnet, daß der Futterkörper (1) an der Aufnahme (2) für die Bohrspindel (3) einen Hals (19) aufweist, auf dem der Sperring (18) drehbar geführt ist, und daß der Sperring (18) einen Zapfen (20) aufweist, der in eine im Hals (19) vorgesehene Aussparung (21) greift, deren Ränder (21.2, 21.2) in Drehrichtung des Sperringes (18) dessen Endstellungen bestimmende Anschläge für den Zapfen (20) bilden.

3. Bohrfutter nach Anspruch 2, dadurch gekennzeichnet, daß der Zapfen (20) von einer radial im Sperring (18) angeordneten Stellschraube (22) gebildet und diese bis zum Austritt des Zapfens (20) aus der Aussparung (21) verstellbar ist, und daß der Sperring (18) bei in die Aussparung (21) vorstehendem Zapfen (20) in dem dann durch die Aussparung (21) zugelassenen Drehbereich Kupplungsglieder (23), die zur Verbindung des Bohrfutters mit der Bohrspindel dienen, am Hals (19) und an der Bohrspindel (3) im Kupplungseingriff hält sowie bei aus der Aussparung (21) ausgetretenem Zapfen (20) in eine Stellung verdrehbar ist, in der im Sperring (18) vorgesehene Ausnehmungen (24) die Kupplungsglieder (23) bis zur Freigabe der Bohrspindel (3) aufnehmen.

4. Bohrfutter nach einem der Ansprüche 1 bis 3, dadurch gekennzeichnet, daß zwischen dem Sperring (18) und dem Futterkörper (1) eine Feder (25) vorgesehen ist, deren Kraft im Sinne einer das Bohrfutter spannenden Relativverdrehung von Futterkörper (1) und Sperring (18) wirksam ist.

5. Bohrfutter nach Anspruch 4, dadurch gekennzeichnet, daß die Feder (25) in einer in Umfangsrichtung verlaufenden Nut (26) des Sperringes (18) angeordnet und einerseits am Nutende, andererseits an einem Stift (27) gehalten ist, der am Futterkörper (1) sitzt und in die Nut (26) vorsteht.

6. Bohrfutter nach einem der Ansprüche 1 bis 5, dadurch gekennzeichnet, daß der Sperring (18) axial verschiebbar am Futterkörper (1) geführt und durch eine Kupplungsfeder (29) im axialen Kupplungseingriff mit der Spannhülse (12) gehalten ist.

7. Bohrfutter nach Anspruch 6, dadurch gekennzeichnet, daß bei zwischen der Spannhülse (12) und dem Futterkörper (1) angeordnetem Spanngewinde (13) zwischen der Spannhülle (12) und dem Sperring (18) eine Kupplungshülse (30) angeordnet ist, die am Futterkörper (1) axial unverschiebbar geführt und nur drehschlüssig mit der Spannhülse (12) verbunden ist.

8. Bohrfutter nach Anspruch 7, dadurch gekennzeichnet, daß als Kupplung zwischen der Kupplungshülse (30) und dem Sperring (18) einander zugeordnete und axial miteinander zum Eingriff kommende Zahnkränze (33) vorgesehen sind.

9. Bohrfutter nach Anspruch 7 oder 8, dadurch gekennzeichnet, daß das Druckstück (9) drehbar und axial unverschiebbar im Futterkörper (1) gelagert ist.

**Claims**

1. A retightening drilling chuck comprising a chuck body (1) which has a mounting (2) for receiving a drilling spindle (3), a clamping cone portion (5) and clamping jaws (8) which are guided at the tapering surface (7) of the clamping cone portion (5) and also with their end (8.1) which faces in the direction in which the clamping cone portion increases in size, radially against a pressure portion (9) which determines their axial position in the drilling chuck, so that the clamping jaws (8) can be displaced by an axial relative movement between the clamping cone portion (5) and the pressure portion (9) radially relative to the axis (10) of a clamping opening (11) which accommodates the shank of the tool to be clamped, for which purpose the clamping cone portion (5) is rotatable in a clamping screwthread (13) on the chuck body (1) and has a clamping sleeve (12) arranged externally on the chuck body (1), characterised in that the clamping cone portion (5) is non-rotatably connected to the clamping jaws (8), that the chuck body (1), between the mounting (2) for receiving the drilling spindle (3) and the clamping opening (11), has an axial through passage (17) through which the hammer action of the drilling spindle (3) or an anvil (4) axially guided in the hollow drilling spindle (3) can be transmitted on to the end of the shank of the tool which is held in the clamping opening (11) between the clamping jaws (8), that the pressure portion (9) is in the form of a ring embracing the passage (17) or the clamping opening (11), and that there is provided a locking ring (18) which is rotatable on the chuck body (1) limitedly between two end positions and which is connected in the peripheral direction to the clamping sleeve (12) by a releasable coupling.

2. A drilling chuck according to claim 1 characterised in that at the mounting (2) for receiving the drilling spindle (3) the chuck body (1) has a neck (19) on which the locking ring (18) is rotatably carried, and that the locking ring (18) has a peg (20) which engages into a recess (21) which is provided in the neck (19) and whose edges (21.2, 21.2) form abutment means for the peg (20) for defining the limit positions of the locking ring (18) in the direction of rotation thereof.

3. A drilling chuck according to claim 2 characterised in that the peg (20) is formed by an adjusting screw (22) which is arranged radially in the locking ring (18) and the screw is displaceable until the peg (20) comes out of the recess (21), and that, when the peg (20) projects into the recess (21), in the range of rotary movement which is then permitted by the recess (21), the locking ring (18) holds coupling members (23) which serve to connect the drilling chuck to the drilling spindle in coupling engagement at the neck (19) and the drilling spindle (3) and, when the peg (20) has come out of the recess (21), the locking ring (18) can be rotated into a position in which recesses (24) in the locking ring (18) receive the coupling members (23) until the drilling spindle (3) is released.

4. A drilling chuck according to one of claims 1 to 3 characterised in that disposed between the locking ring (18) and the chuck body (1) is a spring (25), the force of which is operative to produce a relative rotary movement of the chuck body (1) and the locking ring (18), for tightening the drilling chuck.

5. A drilling chuck according to claim 4 characterised in that the spring (25) is arranged in a peripherally extending groove (26) in the locking ring (18) and is supported on the one hand against the end of the groove and on the other hand against a pin (27) which is carried on the chuck body (1) and projects into the groove (26).

6. A drilling chuck according to one of claims 1 to 5 characterised in that the locking ring (18) is axially displaceably guided on the chuck body (1) and is held by a coupling spring (29) in axial ocoupling engagement with the clamping sleeve (12).

7. A drilling chuck according to claim 6 characterised in that, with a clamping screwthread (13) arranged between the clamping sleeve (12) and the chuck body (1), disposed between the clamping sleeve (12) and the locking ring (18) is a coupling sleeve (30) which is axially immovably guided on the chuck body (1) and which is only non-rotatably connected to the clamping sleeve (12).

8. A drilling chuck according to claim 7 characterised in that rings of teeth (33) which are associated with each other and which come axially into engagement with each other are provided as the coupling means between the coupling sleeve (30) and the locking ring (18).

9. A drilling chuck according to claim 7 or claim 8 characterised in that the pressure portion (9) is mounted rotatably and axially immovably in the chuck body (1).

**Revendications**

1. Mandrin réglable équipé d'un corps de mandrin (1) avec un logement (2) pour une broche de perçage (3), d'un cône de serrage (5) et de mâchoires de serrage (8) guidées sur la surface conique (7) du cône de serrage (5) et également dans le sens radial, avec leur extrémité (8.1) dirigée vers l'élargissement du cône de serrage, sur un élément de pression (9) qui détermine sa position axiale dans le mandrin de serrage de telle façon que les mâchoires de serrage (8) peuvent être déplacées par un mouvement axial relatif entre le cône de serrage (5) et l'élément de pression (9), radialement par rapport à l'axe (10) d'une ouverture de fixation (11) recevant la tige de l'outil à fixer, le cône de serrage (5) pouvant être tourné dans un filetage de serrage (13) sur le corps de mandrin (1) et présentant une douille de serrage (12) disposée à l'extérieur du corps de mandrin (1), caractérisé par le fait que le cône de serrage (5) est couplé en rotation avec les mâchoires de serrage (8), que le corps de mandrin (1) présente, entre le logement (2) pour la broche de perçage (3) et l'ouverture de fixation (11), un passage axial (17) par lequel le mouvement de percussion de la broche de perçage (3) ou d'un percuteur (4) guidé axialement dans la broche de perçage creuse (3) peut être transmis à l'extrémité de la tige de l'outil maintenue dans l'ouverture de fixation (11), entre les mâchoires de serrage (8), que l'élément de pression (9) est conformé en une bague entourant le passage (17) ou l'ouverture de fixation (11), et que sur le corps de mandrin (1) est prévue une bague d'arrêt (18) qui peut être tournée de manière limitée entre deux positions de fin de course et qui est rattachée, dans le sens circonférentiel, à la douille de serrage (12) par un embrayage.

2. Mandrin de serrage selon la revendication 1, caractérisé par le fait que le corps de mandrin (1) présente, sur le logement (2) pour la broche de perçage (3), un col (19) sur lequel la bague d'arrêt (18) est guidée de façon à pouvoir tourner, et que la bague d'arrêt (18) comprend un tenon (20) qui s'engage dans un évidement (21) prévu dans le col (19), dont les bords (21.1, 21.2) constituent des butées pour le tenon (20) qui déterminent les positions de fin de course de la bague d'arrêt (18) dans le sens de rotation de celle-ci.

3. Mandrin de serrage selon la revendication 2, caractérisé par le fait que le tenon (20) est constitué par une vis de réglage (22) qui est disposée radialement dans la bague d'arrêt (18) et peut être dévissée jusqu'à ce que le tenon (20) sorte de l'évidement (21), que, lorsque le tenon (20) dépasse dans l'évidement (21), la bague d'arrêt (18) maintient des organes d'accouplement (23) assurant la liaison entre le mandrin de serrage et la broche de perçage en prise avec le col (19) et avec la broche de perçage (3) dans la plage de rotation alors autorisée par l'évidement (21), et que, lorsque le tenon (20) est sorti de l'évidement (21), elle peut être tournée dans une position dans laquelle des évidements (24) prévus dans la bague d'arrêt (18) reçoivent les organes d'accouplement (23) jusqu'à la libération de la broche de perçage (3).

4. Mandrin de serrage selon l'une quelconque des revendications 1 à 3, caractérisé par le fait que, entre la bague d'arrêt (18) et le corps de mandrin (1) est prévu un ressort (25) dont la force agit dans le sens d'une rotation relative entre le corps de mandrin (1) et la bague d'arrêt (18) pour bloquer le mandrin de serrage.

5. Mandrin de serrage selon la revendication 4, caractérisé par le fait que le ressort (25) est disposé dans une rainure circonférentielle (26) de la bague d'arrêt (18) et s'appuie, d'une part, sur l'extrémité de la rainure et, d'autre part, sur une cheville (27) placée sur le corps de mandrin (1) et dépassant dans la rainure (26).

6. Mandrin de serrage selon l'une quelconque des revendications 1 à 5, caractérisé par le fait que la bague d'arrêt (18) est guidée sur le corps de mandrin (1) de façon à pouvoir être déplacée axialement et maintenue en prise axiale avec la douille de serrage (12) par un ressort d'embrayage (29).

7. Mandrin de serrage selon la revendication 6, caractérisé par le fait que, pour un filetage de serrage (13) disposé entre la douille de serrage (12) et le corps de mandrin (1), une douille d'accouplement (30), qui est guidée sur le corps de mandrin (1) de façon à pouvoir tourner tout en étant immobile dans le sens axial et qui est uniquement couplée en rotation avec la douille de serrage 12, est disposée entre ladite douille de serrage et la bague d'arrêt (18).

8. Mandrin de serrage selon la revendication 7, caractérisé par le fait que des couronnes dentées (33) associées et s'engrenant axialement sont prévues en tant qu'accouplement entre la douille d'accouplement (30) et la bague d'arrêt (18).

9. Mandrin de serrage selon l'une des revendications 7 ou 8, caractérisé par le fait que l'élément de pression (9) est monté dans le corps de mandrin (1) de façon à pouvoir tourner tout en étant immobile dans le sens axial.

Fig. 1

Fig. 2